(19) Europäisches Patentamt

European Patent Office

Office européen des brevets

(11) **EP 2 897 426 A1**

(12) **EUROPEAN PATENT APPLICATION**

(43) Date of publication:
**22.07.2015 Bulletin 2015/30**

(51) Int Cl.:
***H04W 52/24*** (2009.01)          ***H04W 52/28*** (2009.01)
***H04W 52/36*** (2009.01)

(21) Application number: **14290002.6**

(22) Date of filing: **15.01.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventors:
• **Kucera, Stepan**
  **15 Dublin (IE)**

• **Lopez-Perez, David**
  **15 Dublin (IE)**

(74) Representative: **Greenwood, Matthew David et al**
  **Bryers LLP**
  **7 Gay Street**
  **Bath BA1 2PH (GB)**

Remarks:
Amended claims in accordance with Rule 137(2) EPC.

(54) **Method for managing interference, base station and computer program product**

(57)     A method for managing inter-cell interference in a heterogeneous wireless telecommunications system, comprising selecting at least one logical control channel (LC) for activation for user equipment (UE) device transmissions at LC powers varying between 0 and a prede- termined maximum power value, $P_{max}$, and associating a UE device with an active selected LC whereby to allow successful control channel decoding at the UE.

100

FIG. 1

**Description**

TECHNICAL FIELD

The invention relates generally to the field of telecommunications, and, more specifically, although not exclusively to managing inter-cell interference in a heterogeneous wireless telecommunications system.

BACKGROUND

In a heterogeneous wireless telecommunications system or network (HetNet) in which low power cells such as pico- or, femto-cells for example are placed inside or adjacent an area of radio coverage of a macro cell, downlink transmissions using control channels are typically used by two or more of the cells in an independent way. This can result in interference leading to performance degradation for the control signals which will also result in a degradation of the throughput and the quality of service for user equipment devices served by the cells.

SUMMARY

According to an example, there is provided a method for managing inter-cell interference in a heterogeneous wireless telecommunications system, comprising selecting at least one logical control channel (LC) for activation for user equipment (UE) device transmissions at LC powers varying between 0 and a predetermined maximum power value, $P_{max}$, and associating a UE device with an active selected LC whereby to allow successful control channel decoding at the UE. A value of the signal-to-interference-plus-noise ratio (SINR) of an active selected LC can be above a predetermined minimum value, $SINR_{min}$.
Selecting an LC can include maximizing a power/channel overlap-based performance metric. Maximizing a power/channel overlap-based performance metric can include using only binary powers 0 and $P_{max}$. Maximizing a power/channel overlap-based performance metric can include constraining an aggregate control channel overlap for a firstcell and a second cell of the system. Associating a UE device with an active selected LC can include using data representing a UE report of signal strength of serving and/or neighboring cells of the system to determine values for active LC overlap and powers.
In an example, selecting a set of a physical cell identities (PCI) can include maximizing a performance measure over a definition region, wherein the performance measure is a function of a performance metric related to LC number, LC power weights, cell-selection bias, and control channel overlap of first and second cells of the system. At least one LC can be blanked. An LC can be a UE-specific unicast control channel. The unicast control channel can be a logical Physical Downlink Control Channel (PDCCH). A range expansion bias for a cell of the system can be limited by LC decodability. That is, to ensure successful decoding of control channel data at a UE device so that retrieving digital information carried by the control channel is error-free.
Decodability can include the provision of channel reception with a bit error rate below certain threshold. In practice, a signal is typically encoded with codes that are able to auto-correct certain amount of errors. The signal-to-interference-and-noise ratio (SINR) can be above a certain minimum threshold.
According to an example, there is provided a base station in a heterogeneous wireless telecommunications system operable to select at least one logical control channel (LC) for activation for user equipment (UE) device transmissions at LC powers varying between 0 and a predetermined maximum power value, $P_{max}$, and associate a UE device with an active selected LC whereby to allow successful control channel decoding at the UE. The base station can be operable to maintain a value of the signal-to-interference-plus-noise ratio (SINR) of an active selected LC above a predetermined minimum value, $SINR_{min}$. The base station can be operable to select an LC by maximizing a power/channel overlap-based performance metric.
According to an example, there is provided a computer program product, comprising a computer usable medium having computer readable program code embodied therein, said computer readable program code adapted to be executed to implement a method, in a heterogeneous wireless telecommunications system for managing inter-cell interference as provided above.

BRIEF DESCRIPTION OF THE DRAWINGS

Embodiments will now be described, by way of example only, with reference to the accompanying drawings, in which:

   Figure 1 is a schematic diagram of a heterogeneous network according to an example;

Figure 2 is a further schematic diagram of a heterogeneous network according to an example; and

Figure 3 is a further schematic diagram of a heterogeneous network according to an example.

DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

A wireless cellular network consists of so-called macro cells (MCs), which are served by base stations (BSs) with transmit powers in the order of tens of Watts, and that provide a radio coverage ranging from hundreds to thousands of meters.

In heterogeneous cellular networks (HetNets), low-cost low-power BSs can be deployed within the coverage range of the hosting MC to create so-called small cells (SC), which provide high quality wireless connections to unmodified user equipment devices (UEs) in the network of the operator. That is, a heterogeneous wireless telecommunications system can include a first access node (small cell BS) located within the coverage area of a second access node (macro cell BS) for example.

In general, in order to mitigate inter-cell interference, SC deployments are restricted to the use of a small fraction of the licensed spectrum allocated to the primary MC network. A practically attractive deployment scenario consists in simultaneous sharing of the available communication channels by both macro and small cells (so-called co-channel deployment) to increase spatial reuse. However, such co-channel deployments are characterized by traffic/topology-dependent degradation of transmission quality stemming from collisions of transmitted messages among neighbouring cells, i.e. from inter-cell interference.

Data transmissions are considered to be less affected by co-channel interference than control transmissions thanks to the possibility of periodic frequency-dependent data scheduling on the basis of updated channel quality reports. However, in terms of the control plane, current standards allow active scheduling of control messages only in the time domain (subject to unpredictable resource availability), possibly in conjunction with channel quality-aware de-boosting of transmission power. In HetNets, this practical constraint can lead to failures in the delivery of control message from BSs to user equipment (UE) devices causing, for example, radio link and handover (HO) failures. Ultimately, control plane failures can also negatively affect the decoding of the data plane as the control plane conveys the information on downlink/uplink scheduling grants as well as power control commands.

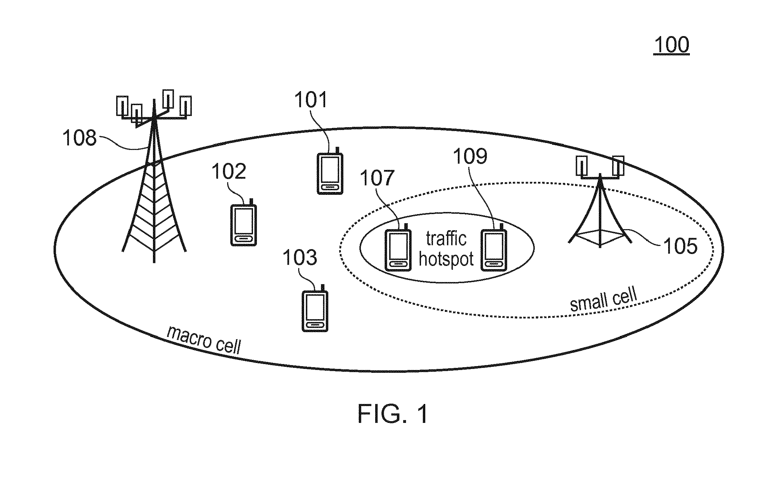

Figure 1 is a schematic diagram of a heterogeneous network 100 according to an example. UEs 101, 102, 103 are in communication with a macro BS 108 in a conventional cellular arrangement. Nearby, a small cell BS 105 operating on at least some of the same frequency bands as the macro cell BS 108. UEs 107 and 109 are in a traffic hotspot region and are in communication with small cell BS 105.

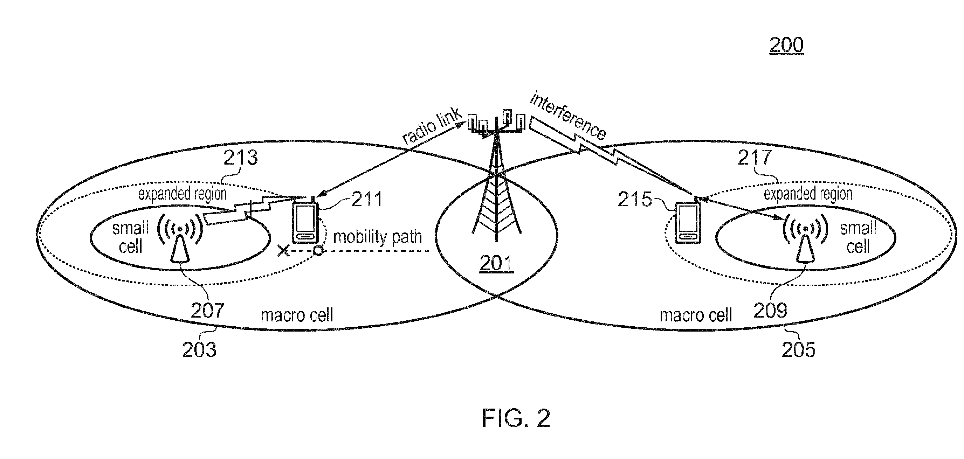

Figure 2 is a schematic diagram of a heterogeneous network 200 according to an example. Figure 2 illustrates the mobility problem and the capacity problem in co-channel deployments of small cells in heterogeneous networks. A macro BS 201 serves an area forming a macro cell 203 or 205. In the example that BS 201 serves area 203, a small cell BS 207 is provided. In the example that BS 201 serves area 205, a small cell BS 209 is provided. A UE 211 served by BS 201 can move into the area served by small cell 207, such as an expanded region 213: Interference between BS 201 and 207 then becomes an issue. Alternatively, for example, a UE 215 served in the expanded region 217 of a small cell served by small cell BS 209 can experience interference given its proximity to BS 201.

Thus, given that small cells are preferably operated in a co-channel mode in which they reuse the communication channel of the hosting MC, the performance of both MC and SC tiers can be negatively affected by direct mutual interference as illustrated in figure 2. The inter-tier co-existence problem becomes practically aggravated by the fact that network operators typically force UEs to apply an SC-favouring bias during a cell-selection process to ensure a sufficient offload of MC traffic by the SCs.

For an SC range-expansion bias (REB) exceeding 5-7 dB, the signal-to-noise-and-interference ratios (SINR) of cell-edge UEs can typically drop below an acceptable level. The reason is that an SC UE 215 located in the artificially expanded SC coverage region 217 suffers from MC interference in proportion to its proximity to the MC BS 201 and the SC REB magnitude. The MC 205 can be termed the aggressor cell and the SC can be termed the victim cell. Alternatively, the SC interference can cause an MC UE 211 to fail to complete a handover to the SC 207 (mobility problem in which the MC and SC roles are inversed).

According to an example, OFDMA systems, such as those of the 4G LTE/LTE-(A) standard family are contemplated, however it will be appreciated that other systems can be used with the methods and apparatus described. In a wireless communications system or network the control plane typically consists of reference signals (so-called CRS), signalling channels (so-called Physical Control Format Indicator Channel (PCFICH) and Physical Hybrid ARQ (Automatic Repeat reQuest) Indicator Channel (PHICH)), and control channels (so-called Physical Downlink Control Channel (PDCCH)). Currently, an LTE base station (both MC and SC) only guarantees that the PDCCH messages of two of its own UEs are mapped onto mutually exclusive physical resources, i.e. no two PDCCH messages share the same physical resource element in a cell (given by a subcarrier frequency in a given time range). This feature essentially corresponds to intra-cell avoidance of PDCCH collisions. However, network-level collision avoidance of both signalling and control transmissions, i.e. coordinated inter-cell interference mitigation in the entire control plane, is not provided for.

According to an example, managing control plane channel interference in a heterogeneous wireless telecommunications system exploits the observation that the mapping of logical control-plane channels onto available physical resources is defined by the LTE standard in the form of a fully deterministic (i.e., predictable) algorithm. In particular, the mapping algorithm uses physical cell identities (PCI) and UE radio network temporary identifiers (RNTI) as its primary configuration inputs, and is based on a static deterministic interleaving, followed by a PCI-dependent cyclic offset of the interleaving output. The PCI/RNTI-dependency as well as the output-offsetting of the logical-to-physical channel mapping imply, respectively, that the adaptation of PCIs and RNTIs represents two degrees of optimization freedom directly affecting the MC/SC co-existence in terms of control-plane channel collisions, and a control channel of one cell overlaps significantly only with a limited number of control channels of a neighbouring cell.

According to an example, optimized assignment of PCIs and power control of "replaceable" MC unicast channels (PDCCH) is used to provide a minimum SINR of the primary SC broadcast channels (CRS, PCFICH, PHICH, common PDCCH) in the entire SC coverage area, and maximize the number of SC unicast channels (PDCCH) with a guaranteed minimum SINR (preferably, in the entire MC/SC coverage area). Furthermore, RNTI optimization can be used to associate UEs only with such PDCCHs candidates whose power profiles provide a minimum SINR in their respective locations. The common search space for PDCCH messages, i.e. the logical unicast PDCCH candidate 0, is treated in the next as a primary broadcast channel owing to its alternative usage for general paging and random access procedures.

Thus, the balance in the fundamental trade-off between the MC PDCCH activity and the SC REB (max. SC REB ~ 35 dB) can be controlled. If an "on/off" power control scheme is employed (in an example transmit power alternates between maximum/zero power; such a scheme can be implemented by restricting UE RNTIs to activate only preselected PDCCHs), then the proposed scheme effectively shuts down the minimum necessary number of MC PDCCHs under given radio propagation/antenna conditions and SC REB.

In case that all MC PDCCHs can be transmitted at maximum power (typically for SC REB < 5-8 dB), the range-expansion goals can be refined to capacity-oriented goals based on maximization of the SC PDCCH SINRs exceeding the minimum value (preferably, in the entire MC/SC coverage area), and maximization of UE PDCCH SINRs to minimize overall PDCCH aggregation level, respectively. In combination with the unavoidable partial blanking of MC PDSCH, the reduced use of MC/SC PDCCH candidates and/or their power reduction (effectively, partial PDCCH blanking from the SC perspective) provides for the prevention of UE radio link failures (RLF). The commonly used model of exponential effective SNR mapping of CRS measurements predicts high occupancy of the control/data space (over 70%) without the risk of RLF. Various multi-frame patterns of OFSs can be used to compensate for the fact that UEs can evaluate CRS quality in arbitrary sub-frames.

As described herein, a scenario in which LTE-compliant co-channel SCs are deployed within the coverage range of an LTE-compliant MC is considered. In particular, the capacity-problem model (see figure 2) is assumed for simplicity, in which the SC is the victim cell and the MC is the aggressor cell. However, it will be appreciated by those skilled in the art that this assumption results in no loss of generality as the same holds also in the context of the dual mobility-problem in which the MC and SC exchange their roles - the MC becomes the victim cell, and the SC becomes the aggressor cell. Although the invention is applicable to practically any number of mutually interfering cells, the present description considers a clear case of a single MC and one SCs for the sake of clarity but with no loss of generality to more complex cases.

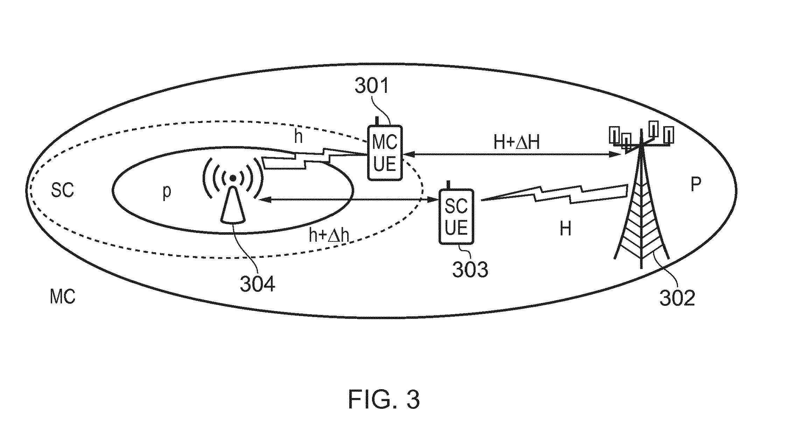

In addition to achieving a minimum UE SINR (denoted as $SINR_{min}$) for successful channel decoding, a system model according to an example assumes the possibility of computing the SINR perceived by the "worst-off" MC/SC UE characterized by the lowest achievable SINR/SNR. With reference to figure 3, which is a further schematic representation of heterogeneous network according to an example, h, H, $\Delta$h, $\Delta$H and p, P denote channel gains and TX powers, respectively.

The received powers hp and (H+$\Delta$H)P of the "worst-off" MC UE 301 communicating with an MC BS 302 are known in the mobility-problem scenario. The received powers (h+$\Delta$h)p and HP of the "worst-off" SC UE 303 communicating with an SC BS 304 are known in the capacity-problem scenario. The UE noise figure N is given. A mapping $\Phi$: $\{\gamma\_i\} \rightarrow \gamma\_all$ for computing the overall effective SINR $\gamma\_all$ of a channel whose i-th resource element (RE) is received with the SINR of $\gamma\_i$ is defined. For example, $\Phi$ is the standard exponential effective SINR mapping for QPSK. If, practically, $\Delta$h=$\Delta$H=0, then only the knowledge of the explicit values of SINR and SNR of the "worst-off" UE is sufficient in both deployment scenarios.

The powers p, P are given as average "per-RE" values, i.e. equal to the total power budget of the cell base station divided by total number of resource elements. In this context, frequency selective fading is not considered in the definition of h, $\Delta$h, H, $\Delta$H.

Thus, with reference to figure 3, the channel gains between the MC/SC BSs and the MC/SC UEs are denoted as H + $\Delta$H; H; h + $\Delta$h; h. The effects of fast fading and shadowing are not considered as they can be compensated by considering performance margins. In addition to the UE noise figure N, the transmit (TX) powers P; p are given as average "per-RE" values, i.e. equal to the power budget of the cell base station divided by number of resource elements (RE). A $SINR_{min}$ is required for a successful channel encoding. The powers (h + $\Delta$h)p and HP of the worst-off SC UE 303 are assumed in the capacity-problem scenario to compute the UE SINR while the received powers (H + $\Delta$H)P and hp of the worst-off MC UE 301 are known in the mobility-problem scenario.

The overlap of MC/SC control channels is a deterministic function of the PCIs and UE RNTIs. Typically, a cell BS indicates the location of UE-specific PDSCH data by sending one dedicated pointer message per scheduled UE bearer (data flow) over a UE-specific PDCCH. Each active UE is identified on the basis of its unique RNTI which is used also for encoding the cyclic redundancy check of the UE-specific PDCCH. The RNTI is a number unique within the serving cell that ranges hexadecimally from 000A to FFF2. On the receiver side, the UE performs a blind search for its designated PDCCH in the control region.

To reduce the search complexity, each UE monitors only a UE-specific search space (SS) in the control region and attempts to decode a limited number of pre-defined PDCCH candidates. The number of PDCCH candidates in an SS depends on the so-called aggregation level L (= 1, 2, 4, 8) which is selected based on channel quality indicators (CQI) reported by the UE. A higher L implies stronger coding as L-times more REs are used per PDCCH, as well as less PDCCH candidates. The REs of the CRS, the PCFICH, and the physical HARQ indicator channel (PHICH) are allocated first. The parameter Ng determines the number of PHICH REs. The remaining unoccupied REs are used to accommodate the PDCCH messages of individual UEs.

On a logical level, these resources are partitioned into control channel elements (CCE) consisting on 36 REs. The available CCEs are numbered from 0 to $N_{CCE,k}$ - 1 where k is the sub-frame index. In a 20 MHz bandwidth, up to ten PDCCH messages of size L = 8 can be transmitted simultaneously in one subframe while 7, 6, 4, 0 remaining CCEs can be used for PDCCH messages at a lower L for Ng = 1=6; 1=2; 1; 2, respectively.

The mappings are provided as follows:

1) CRS: Within the first 3 OFDM symbols, the CRS of the antenna ports 0 and 1 abbreviated as $ap_0$ and $ap_1$ are mapped on individual REs with indices k, l where:

$$k_{ap0} = 6n + [(0 + (PCI \bmod 6)) \bmod 6] \; ; (1)$$

$$k_{ap1} = 6n + [(3 + (PCI \bmod 6)) \bmod 6] \; ; (2)$$

$$l_{ap0} = l_{ap1} = 0; (3)$$

$$n \in [0, 2N_{DL}^{RB} - 1]$$

where $N_{DL}^{RB}$ is the number of resource blocks (RB). For a 20 MHz bandwidth for example, $\mathrm{N}N_{DL}^{RB} = 100$ RBs.

2) PCFICH: Defining RE groups (REG) of four consecutive non-CRS REs, the four quadruplets q of PCFICH REs are mapped on four REGs whose representative REs (the "lowest-index" RE) have the indices:

$$l^R = 0$$
$$k_i^R = k_i \mod N_{RB}^{DL} N_{SC}^{RB}$$

for

$$k_i = \bar{k} + \lfloor i\, N_{RB}^{DL}/2 \rfloor N_{SC}^{RB}/2$$

$$\bar{k} = \left( N_{cell}^{ID} \mod 2N_{RB}^{DL} \right) N_{SC}^{RB}/2$$
$$i = 0, 1, 2, 3$$

3) PHICH: Three RE quadruplets of each PHICH group p are mapped on three REGs not occupied by PCFICH (totally $9N_{CCE,k}$ in subframe k). Given $Ng \in [1/6; 1/2; 1; 2]$, the representative-RE indices are:

$$l^R = 0$$
$$k_i^R = k_i \mod N_{RB}^{DL} N_{SC}^{RB}$$

for

$$k_i = \bar{k} + \lfloor i\, N_{RB}^{DL}/2 \rfloor N_{SC}^{RB}/2$$

$$\bar{k} = \left( N_{cell}^{ID} \mod 2N_{RB}^{DL} \right) N_{SC}^{RB}/2$$
$$i = 0, 1, 2, 3$$

4) PDCCH: Within the set of contiguous $N_{CCE,k}$ CCEs in subframe $k \in [0, 9]$, the logical PDCCH search space (SS) of a UE identified by a cell RNTI consists of M consecutive logical PDCCH candidates where M = 6, 6, 2, 2 for L = 1, 2, 4, 8, respectively. The m-th logical PDCCH candidate for $m \in [1, M]$ comprises L consecutive CCEs starting at the CCE indexed as:

$$CCE_{m,L}^{min} = \mathrm{L}[(\mathrm{Y}_k + m - 1) \mod \lfloor \mathrm{N}_{CCE,k}/\mathrm{L} \rfloor \;; (13)$$

$$\mathrm{Y}_k = 39827\mathrm{Y}_{k-1} \mod 65537; (14)$$

$$\mathrm{Y}_{-1} = \mathrm{RNTI} \in [10, 65522]; (15)$$

In a 20 MHz bandwidth, the ten distinct PDCCH candidates of size L = 8 start at the CCEs indexed as 8n for $n \in [0, 9]$. Each PDCCH candidate of size L = 8; 4; 2 comprises two candidates with L = 4; 2; 1, respectively. Moreover, the first two PDCCH candidates of size 8 are shared for common paging and access messaging ($\mathrm{Y}_k = 0$, M = 4; 2 for L = 4; 8). The logical CCEs are mapped onto the physical REs by using common sub-block interleaving followed by PCI-specific cyclic shift. In particular, all logical RE quadruplets (REGs) are written in a top-to-bottom left-to-right manner into a matrix having 32 columns and the minimum necessary number of rows. Unused elements in the left part of the top row are padded by "NIL" elements. The matrix columns indexed from 0 to 31 are then permutated in the order [1, 17, 9, 25, 5, 21, 13, 29, 3, 19, 11, 27, 7, 23, 15, 31, 0, 16, 8, 24, 4, 20, 12, 28, 2, 18, 10, 26, 6, 22, 14, 30]. A column-wise read-out follows (the "NIL" padding is discarded) and a cyclic offset of the permutated CCE space equal to the cell PCI is applied. The final logical-to-physical REG mapping is carried out in a time-first fashion and ignores already used REGs.

The table below indicates how, in an example, LPCs can be activated at maximum power $P_{max}$ while preventing an the aggregate channel overlap exceeding 66%. That is, the table below represents a macro cell/small cell (MC/SC) channel overlap in terms of percentage of SC channel size (MC>SC) for exemplary MC/SC PCIs of 0/342.

| SC PCI=342→ MC PCI=0↓ $N_g=1/2$ | CRS $ap_0$ | CRS $ap_1$ | PCFICH | PHICH | LPC 0 | LPC 1 | LPC 2 | LPC 3 | LPC 4 | LPC 5 | LPC 6 | LPC 7 | LPC 8 | LPC 9 | other CCEs |
|---|---|---|---|---|---|---|---|---|---|---|---|---|---|---|---|
| CRS $ap_0$ | . | 100 | . | . | . | . | . | . | . | . | . | . | . | . | . |
| CRS $ap_1$ | 100 | . | . | . | . | . | . | . | . | . | . | . | . | . | . |
| PCFICH | . | . | . | 5 | . | 1 | 3 | . | . | . | . | . | . | . | . |
| PHICH | . | . | . | . | 1 | 1 | 4 | 1 | 4 | 3 | 3 | 3 | 1 | 3 | 5 |
| LPC 0 | . | . | . | 10 | . | 15 | 54 | 8 | 8 | 10 | 1 | . | . | . | . |
| LPC 1 | . | . | . | 10 | . | . | 13 | 54 | 7 | 8 | 14 | 1 | . | . | . |
| LPC 2 | . | . | . | 14 | . | . | . | 15 | 51 | 8 | 7 | 11 | 3 | . | . |
| LPC 3 | . | . | . | 10 | . | . | . | . | 15 | 54 | 10 | 7 | 10 | 1 | . |
| LPC 4 | . | . | . | 5 | . | . | . | . | . | 15 | 51 | 10 | 10 | 11 | 2 |
| LPC 5 | . | . | . | 14 | 4 | . | . | . | . | . | 14 | 53 | 10 | 6 | 13 |
| LPC 6 | . | . | 25 | . | 14 | 3 | . | . | . | . | . | 15 | 53 | 11 | 4 |
| LPC 7 | . | . | 25 | 10 | 6 | 13 | 3 | . | . | . | . | . | 14 | 51 | 13 |
| LPC 8 | . | . | 25 | 19 | 11 | 4 | 14 | 3 | . | . | . | . | . | 17 | 58 |
| LPC 9 | . | . | 25 | 5 | 58 | 15 | 4 | 13 | 4 | . | . | . | . | . | 4 |
| other CCEs | . | . | . | . | 6 | 47 | 6 | 6 | 10 | 1 | . | . | . | . | 2 |

The symbol "." represents zero. Table entries are rounded to integers. CRS, PHICH, PCFICH, ULPC 0 are broadcast (BC) channels.

A UE RNTI is the only variable that uniquely determines the location of the UE SS. Practically, however, the logical CCEs are permutated before their actual transmission onto physical OFDM subcarriers by using a standardized mapping algorithm that performs (i) deterministic block-level interleaving, and (ii) deterministic offset, defined based on the cell identify (C-ID), of the interleaver output. Hence, the location of the PDCCHs physically transmitted by a cell depends both on the UE RNTIs and the C-ID.

In current cellular networks, the C-IDs are assigned in a static manner to ensure that such that no two interfering cells have the same C-ID and use a different shift of common reference signals for coherent demodulation purposes. However, UE RNTIs are assigned by serving BSs in a random manner, or without any specific preference. Assuming for the sake of generality cellular systems with possibly variable C-IDs, one can still state that the variability of C-IDs is limited by inter-cell relationships (Neighbour Cell Relationship lists, handovers, etc.) and the service provisioning to a multitude of active/idle UEs. Hence, the C-IDs can be considered as relatively invariant compared to the usage period of UE IDs that can be easily changed on-demand by the serving cell without any update-period restrictions.

According to an example, control channels can be divided into unicast (UC) channels and broadcast (BC) channels. UC channels include the individual UE-specific logical PDCCH candidates (LPC). BC channels include general signalling channels that must be received correctly by all cell UEs as a prerequisite of any wireless service. These channels include the CRS, the PCFICH, the PHICH, and the common LPCs. The first two LPCs 0 and 1 of size 8 are associated with both the common and the UE-specific PDCCHs.

According to an example, UC LPCs for UE-specific PDCCH signalling can be activated in a pre-determined order minimizing the overlap of the active MC/SC control channels, and only to an extent limiting the control channel resource overlap such that the worst-off UEs achieve a minimum $SINR_{min}$ for each control channel under the given SC REB. In general, active LPCs are power controlled to maximize the number of active LPCs. As discussed subsequently, the ordered (sub)set of usable LPCs is determined for a given networking scenario (SC REB) by using combinatorial optimization maximizing the subset size and the achievable channel SINRs over the PCI/RNTI space subject to $SINR_{min}$. As a result, the most suitable PCIs are determined as well as the associated LPC power weights to be applied to the nominal (maximum) BS TX power. RNTI control (optimization) is used to associate UEs only with such PDCCH SSs that comprise at least one of the active LPC in selected sub-frames. These sub-frames characterized by the pre-determined quality-of-service guarantees are then referred to as the "orthogonally-filled sub-frames" given the maximum orthogonality of the therein flexibly activatable channels.

In an example, a 20 MHz bandwidth is assumed, PHICH configuration factor Ng=1/2 for both MC and SC, as well as a PDCCH aggregation level equal to eight. Then, seven CCEs remain unused by PDCCH messages at aggregation level eight, but can be used by PDCCH messages having a lower aggregation level. Only the first antenna port 0 is in use in both MC and SC.

Assuming further an MC cell ID of 0, and an SC cell ID of 243, the overlap of individual LTE channels in terms of the physical resources as assigned by the above mentioned MC/SC resource allocation algorithms can be provided in the form of a collision table such as that provided above, which is a collision table of MC-SC overlap in percent of SC channel size according to an example. The table is column-wise normalized to 100%, i.e. the overlap entries are expressed as fractions of SC channels.

The MC CRS of antenna port 0 coincides with the unused (blanked) locations of SC CRS of antenna port 1. In other words, MC and SC CRS do not interfere with any other channel of the neighbouring cell. Approximately 1/6 of the available cell ID space yields such CRS alignment. In the collision table, the SC PCFICH overlaps in 50% with the MC PDCCH 8. Hence, it would be desirable to avoid the usage of MC PDCCH 8 if maximum aggregate overlap between MC and SC channels is to be below 50%. On the other hand, the MC PDCCH 3 and/or 4 do not overlap at all with the SC PDCCH 1 and/or 2, hence any combination thereof can be scheduled under any circumstances given channel orthogonality.

As a result of the varying degree of channel overlap and possibly employed channel power control, individual channel REs are received with varying SINR (orthogonal REs experiencing no interference are received at SINR=SNR). To compute the overall effective SINR at which a channel is received, a model based on so-called exponential effective SINR mapping (EESM) can be used according to an example to map the instantaneous values of SINRs of individual REs to a corresponding BLER (Block Error Rate) value, i.e. overall SINR. The EESM method estimates the effective SINR using the following formula: where $\gamma$ is a vector $[1, .2,., .N]$ of N per-subcarrier SINR values, which are typically different in a frequency selective channel. ß is the parameter to be determined for each Modulation Coding Scheme (MCS) level, and this value is used to adjust EESM function to compensate the difference between the actual BLER and the predicted BLER. 3GPP recommendations on ß are as follows:

| Modulation | Code Rate | $\beta$ |
|---|---|---|
| QPSK | 1/2 | 1.57 |
| | 2/3 | 1.69 |
| | 3/4 | 1.69 |
| 16QAM | 1/2 | 4.56 |
| | 2/3 | 6.42 |
| | 3/4 | 7.33 |

Assuming simple "on/off" power control, the requirement of minimum SINR of each cell UE is equivalent to the requirement of a maximum permissible aggregate overlap between active MC/SC channels for a given radio propagation model.

Optimization of the SC PCI (preferably, jointly with the MC PCI) allows maximisation of the number of usable MC/SC PDCCH candidates. The PCI search space can be reduced by excluding PCI combinations for which the MC/SC broadcast channels exceed a maximum permissible extent. The same criterion can be used during the combinatorial search for the best MC/SC PDCCH combination. Unused PDCCH channels under the "on/off" power control can still be used, but with reduced power. This measure typically restricts their usage to cell-center UEs only.

For SC biases up to 20 dB, the MC two-port MIMO functionality (primarily transmit diversity for cell-edge UEs) can typically be used without any effect on the operation of the OFS. Then, for bias values over 20 dB, it is more and more desirable to "hide" the MC CRS into the blanked REs of the second SC antenna port. For bias values over 30 dB (having possibly no practical applicability), such partitioning of the two antenna ports between the MC and the SC effectively becomes a necessity, reducing the available PCI search space to 1/6-th.

The blanking of MC/SC PDCCHs in selected sub-frames implies restrictions on UE RNTIs. Thus, the scheduler needs to be aware of which UEs, associated with PDCCH candidates via their RNTIs, are allowed to be scheduled in each sub-frame. Although each UE can be with no difficulty assigned to one particular OFS, multiple OFS should be configured in a frame in order to provide for fast HARQ responsiveness of the scheduler. Simulations show that at least 2-4 UE can be easily assigned RNTIs that grant access to unique PDCCH candidates in 2-4 sub-frames of a frame.

In the more complex case of SINR maximization and/or general PDCCH power control, UEs must be assigned to PDCCH with best SINR and/or sufficient coverage, respectively. This goal can be achieved on the basis of their measurements of the service quality by means of the configurable RRC reporting. For example, the (periodic) reporting of the event A5 (serving cell worse than threshold 1 & neighbouring cell better than threshold 2) can be used to determine how close is a UE to the cell edge, and what PDCCH would be the most suitable in terms of the aggregate overlap with other active channels, i.e. SINR.

If the MC has hundreds of UEs, then there is likely to be more critical "cell-edge" UEs (say 50% of MC load) than available "protected" PDCCH candidates (e.g. 5-20 depending on aggregation level per subframe). Time division multiplexing can be used to allow multiple UEs to benefit from different OFSs. In general, both the UE RNTI management scheme and the supporting RRC signalling must work efficiently.

In this context, simulations of one typical scenario show that the optimum RNTI management (most critical UE use the "best" PDCCH candidates) could yield PDCCH improvements of up to 11 dB.

In general, while being fully distributed and compliant with the LTE-(A) standard family, the invention significantly reduces the probability of handover failure/data decoding errors, which are a major problem in HetNet environments. The expanded region of SC can thus be extended. In SC deployments with relatively large cell-selection biases (REB>5-8 dB), MC-SC co-existence is ensured by guaranteeing a minimum SINR of all actively used control channels in LTE to all network UEs.

To formalize the notion of channel overlap, a normalized overlap matrix $\Omega_{agg>vie}$ can be used whose element in the i-th row and the j-th column is the ratio of (i) the number of REs in which the i-th channel of the aggressor cell, agg overlaps with the j-th channel of the victim cell, vic, and (ii) the total RE number of the j-th channel of the victim cell, vic.

$\Omega$ is a function of the MC/SC PCI vector PCI. The association of UEs to the UE-specific rows/columns of $\Omega$ is given by the UE RNTIs. The normalization by the RE channel size of the victim cell implies that $\Omega_{MC>SC}$ generally differs from $\Omega_{SC>MC}$ but each adds up row-wise or column-wise to 1, respectively. The OFS concept is formalized on the basis of sequential PCI and RNTI optimization. Let the vector A whose length equals to the total number of BC and UC channels denote the set of relative weights ranging from 0 to 1 that are used for scaling the maximum MC power P of the MC BC/UC channels between 0 and $P_{max}$. Let A(Nm) denote a binary instance of A in which (i) the power weights of the BC channels are equal to 1 (to ensure their correct reception throughout the entire cell), and (ii) exactly Nm weights of the MC UC channels is equal to 1 and the others to 0.

Let {$\Lambda$(Nm)} denote the set of all possible instances of A(Nm). The SC equivalent of A is $\lambda$. In general, the binary elements of $\lambda$ and A can be defined to acquire multiple discrete or even continuous-range levels. This option, however, complicates RNTI management and is ignored herein for the sake of simplicity. Furthermore, a performance metric is provided:

$$\Pi(N_{m,},N_s) = \begin{matrix} \min \\ \forall \mathbf{\Lambda} \in \{\mathbf{\Lambda}(N_m)\} \\ \forall \boldsymbol{\lambda} \in \{\boldsymbol{\lambda}(N_s)\} \end{matrix} \pi(\Omega(\mathbf{PCI}),\mathbf{\Lambda},\boldsymbol{\lambda})$$

Given the MC/SC power weights A; $\lambda$, the mapping $\pi$ can be defined to determine the minimum control channel SINR on the basis of the exponential mapping that projects the individual "per-RE" SINRs of a channel onto an effective SINR in the capacity-problem scenario ($\Omega = \Omega_{MC>SC}$) as:

$$\pi_{MC>SC} = \begin{matrix} \min \\ \forall j \mid \boldsymbol{\lambda}_{j\neq0} \end{matrix} -\beta \ln\left(\sum_{\forall i} \mathbf{\Omega}_{MC>SC}[ij] e^{-\frac{\lambda_j(h+\Delta h)p}{\beta\Lambda_i HP + \beta n}}\right)$$

and in the mobility-problem scenario ($\Omega = \Omega_{SC>MC}$) as:

$$\pi_{SC>MC} = \frac{\min}{\forall i \mid \Lambda_{i \neq 0}} - \beta \ln \left( \sum_{\forall j} \Omega_{SC>MC} [ij] e^{-\frac{\Lambda_i (H + \Delta H) P}{\beta \lambda_j hp + \beta n}} \right)$$

where $\beta$ = 1:57; 1:69; 1:69 based on the 3GPP recommendations for the QPSK code rate of 1/2 ; 2/3 ; 3/4, respectively.

In order to address both capacity and mobility problems simultaneously, one can consider the worst-case minimum SINR :

$$\pi(\Omega, \Lambda, \lambda) = \min \left( \pi(\Omega_{MC>SC}, \Lambda, \lambda), \pi(\Omega_{SC>MC}, \Lambda, \lambda) \right)$$

Then, the optimum PCI vector PCI* (or, the SC PCI for a given MC PCI) is found by solving the optimization problem:

$$\mathbf{PCI}^* = \arg_{\mathbf{PCI}} \min_{\Omega} \Xi(\Pi(N_m, N_s)) \quad N_m, N_s \in A$$

that minimizes a penalty measure $\Xi$ (i.e., a selection metric) in a definition region A. For example, $\Xi$ can be the distance:

$$\Xi(\Pi(A)) = \sqrt{\sum_{\forall N_m, N_s \in A} \Pi(N_m, N_s)^2 - (\max_{\Omega} \Pi(N_m, N_s))^2}$$

of the lowest channel SINRs associated with the solution PCI* from the maximum achievable values over all PCIs.

The definition set A is generally limited by the maximum number of MC/SC UC LPCs, i.e.

$$A \subset [0, N_m^{\max}] \times [0, N_s^{\max}]$$
.

If the MC/SC UE distribution can be estimated as an (approximate) function $N_m$ = f(Ns, REB) of the SC REB, A can be narrowed down to the graph of f, i.e. the union of MC/SC load pairs [f(Ns, REB), Ns], for which $\Pi(Nm, Ns) \geq$ SINR$_{min}$.

Given the solution PCI*, the optimum weight profiles $\Lambda^*$; $\lambda^*$ for the available MC/SC LPCs are found as:

$$[\Lambda^*(N_m), \lambda^*(N_s)] = \arg_{\Lambda, \lambda} \max_{\substack{\forall \Lambda \in \{\Lambda(N_m)\} \\ \forall \lambda \in \{\lambda(N_s)\}}} \Pi(N_m, N_s)$$

for all Nm, Ns such that $\Pi(Nm, Ns) \geq$ SINR$_{min}$. If $\Pi(Nm, Ns) <$ SINR$_{min}$, then $\Lambda^*$; $\lambda^*$ are vectors of zeros.

Accordingly, UEs can be then associated via their RNTIs with the active LPCs as indicated by $\Lambda^*$ and $\lambda^*$. The zero weights in the profiles $\Lambda^*$(Nm) and $\lambda^*$(Ns) indicate inactive LPCs but can be increased up to a level when exactly $\Pi(Nm, Ns) =$ SINR$_{min}$. As LPCs with reduced power can be used for PDCCH transmissions solely to UEs located within a limited distance from the BS, only zero weights that are non-zero in the profiles $\Lambda^*$ and $\lambda^*$ having larger Nm and Ns should be increased to simplify the RNTI management.

The above optimization implicitly assumes the MC and the SC to announce the variations of their UE load Nm and Ns because the optimum profiles $\Lambda^*$(Nm) and $\lambda^*$(Ns) are functions of Nm and Ns. An important issue is that an optimum weight profile may not generally be a subset of an optimum weight profile of a larger size, i.e. $\Lambda^*$(Nm) $\not\subset \Lambda^*$(Nm

+ x) and/or λ*(Ns) ⊄ λ*(Ns + x) for x > 0. In other words, the activity of a given LPC (or its power weight in general) may vary with UE cell load, i.e. UE RNTIs would have to be updated as a function of Nm and/or Ns to prevent limited UE schedulability while maintaining the OFS optimality on the basis of Λ* and λ*.

The MC-SC communication and load-dependent RNTI updates can be avoided by accepting a possibly suboptimal OFS performance at lower cell loads. Assuming an $N^{max}$-limit for one cell or a constraint on the MC/SC traffic distribution such as $N_m^{max}/N_s^{max}$ (periodical corrections reflecting the actual cell load are possible), the modified approach consists in (i) finding the optimum $\mathbf{\Lambda} * (N_m^{max})$ and $\mathbf{\lambda} * (N_s^{max})$ for maximum $N_m^{max}$, $N_s^{max}$ subject to $\Pi(N_m^{max}, N_s^{max}) \geq \mathrm{SINR}_{\min}$, and (ii) determining $\Lambda^*(Nm), \lambda^*(Ns)$ for $\mathrm{N}_m \leq N_m^{max}$ and $\mathrm{N}_s \leq N_s^{max}$ as the subsets of $\mathbf{\Lambda} * (N_m^{max})$, $\mathbf{\lambda} * (N_s^{max})$ having the size Nm, Ns.

To this end, $\Xi(\Pi(A))$ is maximized over A, λ for Ω = Ω(PCI"), and A = {$N_m \leq N_{max}$, Ns ≤ $N_{max}$}. In the table above, $N_m^{max} = 6$ and $N_s^{max} = 7$. =

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

## Claims

1. A method for managing inter-cell interference in a heterogeneous wireless telecommunications system, comprising:

    selecting at least one logical control channel (LC) for activation for user equipment (UE) device transmissions at LC powers varying between 0 and a predetermined maximum power value, $P_{max}$; and
    associating a UE device with an active selected LC whereby to allow successful control channel decoding at the UE.

2. A method as claimed in claim 1, wherein a value of the signal-to-interference-plus-noise ratio (SINR) of an active selected LC is above a predetermined minimum value, $SINR_{min}$.

3. A method as claimed in claim 1 or 2, wherein selecting an LC includes maximizing a power/channel overlap-based performance metric.

4. A method as claimed in claim 3, wherein maximizing a power/channel overlap-based performance metric includes using only binary powers 0 and $P_{max}$.

5. A method as claimed in claim 3 or 4, wherein maximizing a power/channel overlap-based performance metric includes constraining an aggregate control channel overlap for a first cell and a second cell of the system.

6. A method as claimed in any preceding claim, wherein associating a UE device with an active selected LC includes using data representing a UE report of signal strength of serving and/or neighboring cells of the system to determine values for active LC overlap and powers.

7. A method as claimed in any preceding claim, further comprising:

    selecting a set of a physical cell identities (PCI) by maximizing a performance measure over a definition region, wherein the performance measure is a function of a performance metric related to LC number, LC power weights, cell-selection bias, and control channel overlap of first and second cells of the system.

8. A method as claimed in any preceding claim, wherein at least one LC is blanked.

9. A method as claimed in any preceding claim, wherein an LC is a UE-specific unicast control channel.

10. A method as claimed in claim 9, wherein the unicast control channel is a logical Physical Downlink Control Channel (PDCCH).

**11.** A method as claimed in any preceding claim, wherein a range expansion bias for a cell of the system is limited by LC decodability.

**12.** A base station in a heterogeneous wireless telecommunications system operable to:

select at least one logical control channel (LC) for activation for user equipment (UE) device transmissions at LC powers varying between 0 and a predetermined maximum power value, $P_{max}$; and
associate a UE device with an active selected LC whereby to allow successful control channel decoding at the UE.

**13.** A base station as claimed in claim 12, wherein the base station is operable to maintain a value of the signal-to-interference-plus-noise ratio (SINR) of an active selected LC above a predetermined minimum value, $SINR_{min}$,

**14.** A base station as claimed in claim 12 or 13, wherein the base station is operable to select an LC by maximizing a power/channel overlap-based performance metric.

**15.** A computer program product, comprising a computer usable medium having computer readable program code embodied therein, said computer readable program code adapted to be executed to implement a method, in a heterogeneous wireless telecommunications system for managing inter-cell interference as claimed in any of claims 1 to 11.

**Amended claims in accordance with Rule 137(2) EPC.**

**1.** A method for managing inter-cell interference in a heterogeneous wireless telecommunications system (100; 200), comprising:

activating at least one selected logical control channel (LC) for user equipment (UE) device transmissions at LC powers varying between 0 and a predetermined maximum power value, $P_{max}$, such that a power/overlap based performance metric is maximised
and
using a Radio Network Temporary Identifier (RNTI) of a UE to associate the UE device with an active selected LC whereby to allow successful control channel decoding at the UE using data received from the active selected LC.

**2.** A method as claimed in claim 1, wherein a value of the signal-to-interference-plus-noise ratio (SINR) of an active selected LC is above a predetermined minimum value, $SINR_{min}$.

**3.** A method as claimed in claim 1 or 2, wherein selecting an LC includes maximizing a power/channel overlap-based performance metric.

**4.** A method as claimed in claim 3, wherein maximizing a power/channel overlap-based performance metric includes using only binary powers 0 and $P_{max}$.

**5.** A method as claimed in claim 3 or 4, wherein maximizing a power/channel overlap-based performance metric includes constraining an aggregate control channel overlap for a first cell and a second cell of the system.

**6.** A method as claimed in any preceding claim, wherein associating a UE device with an active selected LC includes using data representing a UE report of signal strength of serving and/or neighboring cells of the system to determine values for active LC overlap and powers.

**7.** A method as claimed in any preceding claim, further comprising:

selecting a set of a physical cell identities (PCI) by maximizing a performance measure over a definition region, wherein the performance measure is a function of a performance metric related to LC number, LC power weights, cell-selection bias, and
control channel overlap of first and second cells of the system.

**8.** A method as claimed in any preceding claim, wherein at least one LC is blanked.

9. A method as claimed in any preceding claim, wherein an LC is a UE-specific unicast control channel.

10. A method as claimed in claim 9, wherein the unicast control channel is a logical Physical Downlink Control Channel (PDCCH).

11. A method as claimed in any preceding claim, wherein a range expansion bias for a cell of the system is limited by LC decodability.

12. A base station (108; 201; 302; 207; 209; 304) in a heterogeneous wireless telecommunications system (100; 100) operable to:

activate at least one selected logical control channel (LC) for user equipment (UE) device (211; 215; 301; 303) transmissions at LC powers varying between 0 and a predetermined maximum power value, $P_{max}$, such that a power/overlap based performance metric is maximised; and
use a Radio Network Temporary Identifier (RNTI) of to associate the UE device (211; 215; 301; 303) with an active selected LC whereby to allow successful control channel decoding at the UE (211; 215; 301; 303) using data received from the active selected LC.

13. A base station (108; 201; 302; 207; 209; 304) as claimed in claim 12, wherein the base station is operable to maintain a value of the signal-to-interference-plus-noise ratio (SINR) of an active selected LC above a predetermined minimum value, $SINR_{min}$.

14. A base station (108; 201; 302; 207; 209; 304) as claimed in claim 12 or 13, wherein the base station is operable to select an LC by maximizing a power/channel overlap-based performance metric.

15. A computer program product, comprising a computer usable medium having computer readable program code embodied therein, said computer readable program code adapted to be executed to implement a method, in a heterogeneous wireless telecommunications system for managing inter-cell interference as claimed in any of claims 1 to 11.

FIG. 1

FIG. 2

EP 2 897 426 A1

FIG. 3

**EUROPEAN SEARCH REPORT**

Application Number

EP 14 29 0002

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/009634 A1 (BUDIANU PETRU C [US] ET AL) 14 January 2010 (2010-01-14)<br>* paragraph [0040] *<br>* paragraphs [0048], [0049] *<br>* paragraph [0072] *<br>* figures 1,2 *<br>----- | 1-15 | INV.<br>H04W52/24<br>H04W52/28<br><br>ADD.<br>H04W52/36 |
| X | NTT DOCOMO: "Control channel ICIC for macro-femto deployments",<br>3GPP DRAFT; R1-106186 MACRO-FEMTO ICIC,<br>3RD GENERATION PARTNERSHIP PROJECT (3GPP),<br>MOBILE COMPETENCE CENTRE ; 650, ROUTE DES LUCIOLES ; F-06921 SOPHIA-ANTIPOLIS CEDEX ; FRANCE,<br>vol. RAN WG1, no. Jacksonville, USA;<br>20101115, 9 November 2010 (2010-11-09),<br>XP050489636,<br>[retrieved on 2010-11-09]<br>* the whole document *<br>----- | 1-15 | |
| X | US 2013/083730 A1 (GAAL PETER [US] ET AL) 4 April 2013 (2013-04-04)<br>* paragraph [0012] - paragraph [0014] *<br>* paragraph [0065] - paragraph [0067] *<br>* figures 7,8,9 *<br>----- | 1-15 | TECHNICAL FIELDS SEARCHED (IPC)<br><br>H04W |
| X | US 2013/322374 A1 (CAI LUJING [US] ET AL) 5 December 2013 (2013-12-05)<br>* paragraph [0124] - paragraph [0131] *<br>* figure 4a *<br>----- | 1,12,15 | |

The present search report has been drawn up for all claims

| Place of search | Date of completion of the search | Examiner |
|---|---|---|
| The Hague | 8 July 2014 | Reville, Lenora |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 29 0002

This annex lists the patent family members relating to the patent documents cited in the above-mentioned European search report.
The members are as contained in the European Patent Office EDP file on
The European Patent Office is in no way liable for these particulars which are merely given for the purpose of information.

08-07-2014

| Patent document cited in search report | | Publication date | Patent family member(s) | | Publication date |
|---|---|---|---|---|---|
| US 2010009634 | A1 | 14-01-2010 | NONE | | |
| US 2013083730 | A1 | 04-04-2013 | US | 2013083730 A1 | 04-04-2013 |
| | | | US | 2013083731 A1 | 04-04-2013 |
| | | | US | 2013084913 A1 | 04-04-2013 |
| | | | WO | 2013052119 A1 | 11-04-2013 |
| | | | WO | 2013052134 A1 | 11-04-2013 |
| | | | WO | 2013052135 A1 | 11-04-2013 |
| US 2013322374 | A1 | 05-12-2013 | TW | 201409959 A | 01-03-2014 |
| | | | US | 2013322374 A1 | 05-12-2013 |
| | | | WO | 2013181542 A1 | 05-12-2013 |

EPO FORM P0459

For more details about this annex : see Official Journal of the European Patent Office, No. 12/82